# EUROPÄISCHE PATENTSCHRIFT

(11) **EP 2 005 667 B1**
(45) Veröffentlichungstag und Bekanntmachung des Hinweises auf die Patenterteilung: **22.09.2010**
(21) Anmeldenummer: 07727326.6
(22) Anmeldetag: 26.03.2007
(51) Int. Cl.: H04W 76/02

(54) **VERFAHREN ZUR KOMMUNIKATION VON ENDGERÄTEN ÜBER PAKETVERMITTELTE MOBILFUNKNETZE**
METHOD OF COMMUNICATION OF TERMINAL DEVICES VIA PACKET-SWITCHED MOBILE RADIO NETWORKS
PROCÉDÉ DE COMMUNICATION DE TERMINAUX PAR L'INTERMÉDIAIRE DE RÉSEAUX DE RADIOTÉLÉPHONIE MOBILE À COMMUTATION PAR PAQUETS

(30) Priorität: 31.03.2006 DE 102006015044
(43) Veröffentlichungstag der Anmeldung: 24.12.2008
(73) Patentinhaber: SIEMENS AKTIENGESELLSCHAFT, 80333 München (DE)
(72) Erfinder: CAMILO, Tiago, P-2950 Quinta Do Anjo (PT); ESTEVES CARVALHO SOFIA, Rute, 4450-677 Matosinhos (DE); PASQUALINI, Sandrine, 81547 München (DE); WEVERING, Stefan, 82284 Grafrath (DE); DE FRIAS REBELO NUNES, Pedro, Ricardo, P-2795016 Linda-A-Velha (PT)
(86) Internationale Anmeldenummer: PCT/EP2007/052853
(87) Internationale Veröffentlichungsnummer: WO 2007/113154

(56) Entgegenhaltungen:
- WO-A-2004/064442
- WO-A1-2004/100595
- "3rd Generation Partnership Project; Technical Specification Group Services and System Aspects; General Packet Radio Service (GPRS); Service description; Stage 2 (Release 6)" 3GPP TS 23.060 V6.12.0 (2006-03), TECHNICAL SPECIFICATION, [Online] 28. März 2006 (2006-03-28), Seiten 1-212, XP002438768 Gefunden im Internet: URL:http://www.3gpp.org/ftp/Specs/html-inf o/23060.htm> [gefunden am 2007-06-20]

## Beschreibung

Die Erfindung betrifft ein Verfahren zur Kommunikation von Endgeräten über paketvermittelte Mobilfunknetze, welche jeweils ein Funknetz und ein über einen Zugangsknoten zugängliches Kernnetz umfassen.

Darüber hinaus betrifft die Erfindung einen entsprechenden Zugangsknoten zu dem Kernnetz eines Mobilfunknetzes und ein entsprechendes Endgerät.

In Mobilfunknetzen kommen immer stärker paketvermittelte Übertragungsdienste zum Einsatz. Die Mobilfunknetze weisen deshalb eine entsprechende Infrastruktur auf, welche Datenpakete aus dem Funknetz von einem Endgerät empfangen und im Kernnetz weiterleiten kann bzw. Datenpakete aus dem Kernnetz in das Funknetz an ein Endgerät übertragen kann.

Ein entsprechendes Mobilfunknetz ist aus dem Dokument "3rd Generation Partnership Project; Technical Specification Group Services and System Aspects; General Packet Radio Service (GPRS); Service description; Stage 2 (Release 6)" 3GPP TS 23.060 V6.12.0 (2006-03), TECHNICAL SPECIFICATION, 28. März 2006 (2006-03-28) bekannt.

Bei der Nutzung paketvermittelter Mobilfunknetze ist es erwünscht, dass ein mobiles Endgerät, welches sich aus dem ihm zugeordneten Heimatnetz herausbewegt, weiterhin paketvermittelte Datenübertragungen durchführen kann. Deshalb gibt es heutzutage so genannte Roaming-Vereinbarungen zwischen unterschiedlichen Netzbetreibern, welche es ermöglichen, dass ein nicht im Heimatnetz befindliches Endgerät mit dem entsprechenden Fremdnetz kommuniziert und hierüber eine Datenverbindung zu einem anderen Endgerät aufbaut. Bei den derzeit verwendeten Roaming-Diensten wird hierbei über den Zugangsknoten des Fremdnetzes direkt eine Verbindung über einen Tunnel zu dem Heimatnetz und von dort zu dem anderen Endgerät hergestellt. Dies kann zu langen Übertragungswegen und Verzögerungen führen, insbesondere wenn das Fremdnetz und Heimatnetz räumlich weit entfernt auseinander liegen. Es ist deshalb wünschenswert, dass ein Endgerät in einem Fremdnetz zur Da-tenübertragung möglichst auch das lokale Fremdnetz zur Datenübertragung nutzen kann.

Im Bereich des Zusammenwirkens von GPRS/UMTS-Netzen mit WLAN-Netzen ist ein Mechanismus bekannt, bei dem ein WLAN-Zugangspunkt eine Authentifizierung eines Endgeräts auch dann ermöglicht, wenn die Netzdomäne zur Authentifikation dem WLAN-Zugangspunkt nicht bekannt ist. In diesem Fall stellt der WLAN-Zugangspunkt dem Endgerät eine Liste von möglichen Mobilfunknetzen bereit, mit denen eine Authentifikation in dem WLAN des vorliegenden Zugangspunktes möglich ist. Das Endgerät verwendet dann basierend auf der von dem WLAN-Zugangspunkt bereitgestellten Liste der möglichen Mobilfunknetze eine neue Netzdomäne zur Durchführung der Authentifikation. Diese bekannte Lösung stellt einem Endgerät Informationen über Netzdomänen zur Verfügung, jedoch wird keine Mobilfunkverbindung des Endgeräts in einem paketvermittelten fremden Mobilfunknetz derart ermöglicht, dass die Datenübertragung über das Fremdnetz stattfindet.

Aufgabe der Erfindung ist es deshalb, ein Verfahren zur Kommunikation von Endgeräten über paketvermittelte Mobilfunknetze zu schaffen, bei dem ein Endgerät zur Übertragung der Datenpakete zu einem anderen Endgerät auch das lokale Mobilfunknetz nutzen kann, in dem sich das Endgerät gerade befindet.

Diese Aufgabe wird durch die unabhängigen Patentansprüche gelöst. Weiterbildungen der Erfindung sind in den abhängigen Ansprüchen definiert.

In dem erfindungsgemäßen Verfahren sendet in einem Schritt a) ein erstes Endgerät, dem eine erste Netzidentifikation zur Identifizierung eines Netzbereichs in einem ersten paketvermittelten Mobilfunknetz zugeordnet ist, eine Verbindungsanfrage umfassend die erste Netzidentifikation zum Verbinden mit dem Netzbereich gemäß der ersten Netzidentifikation an einen Zugangsknoten des Kernnetzes des zweiten paketvermittelten Mobilfunknetzes. Der Begriff Netzbereich ist hierbei weit auszulegen und entspricht insbesondere einer Netzdomäne mit einem entsprechenden Domain-Namen bzw. einer Adresse, mit der die Domäne identifizierbar ist. Darüber hinaus sind die Begriffe Funknetz und Kernnetz hinlänglich in der Mobilfunk-Technologie bekannte Begriffe, wobei häufig auch die englischen Ausdrücke "Radio-Access-Network" für Funknetz und "Core-Network" für Kernnetz verwendet werden.

In einem Schritt b) des erfindungsgemäßen Verfahrens detektiert der Zugangsknoten des Kernnetzes des zweiten paketvermittelten Mobilfunknetzes nach Empfang der Verbindungsanfrage, dass die erste Netzidentifikation einen Netzbereich identifiziert, der zu einem anderen als dem zweiten paketvermittelten Mobilfunknetz gehört. Anschließend sendet dann der Zugangsknoten dem ersten Endgerät eine Antwort, in der eine oder mehrere zweite Netzidentifikationen enthalten sind, welche Netzbereiche des zweiten paketvermittelten Mobilfunknetzes identifizieren, mit denen das erste Endgerät verbindbar ist. Durch dieses erfindungsgemäße Merkmal wird es ermöglicht, dass einem Endgerät in einem fremden, zweiten paketvermittelten Mobilfunknetz Informationen über Netzbereiche bzw. Netzdomänen des zweiten paketvermittelten Mobilfunknetzes bereitgestellt werden.

Als Folge kann dann das erste Endgerät in einem Schritt c) eine der zweiten Netzidentifikationen auswählen und anschließend eine neue Verbindungsanfrage zum Verbinden mit dem Netzbereich gemäß der ausgewählten zweiten Netzidentifikation an den Zugangsknoten des Kernnetzes des zweiten paketvermittelten Mobilfunknetzes senden. Dies bedeutet, dass das erste Endgerät nunmehr nicht die originäre Netzidentifikation aus seinem Heimat-Mobilfunknetz verwendet, sondern auf eine zweite Netzidentifikation im Fremdnetz zurückgreift.

Schließlich wird in einem Schritt d) nach Empfang der neuen Verbindungsanfrage eine Verbindung über den Netzbereich gemäß der ausgewählten zweiten Netzidentifikation hin zu einem zweiten Endgerät hergestellt. Durch diese Verbindung über den zweiten Netzbereich ist sichergestellt, dass die paketvermittelte Datenübertragung zwischen dem ersten und zweiten Endgerät immer über den Zugang des fremden, zweiten Mobilfunknetzes zum paketvermittelten Kernnetz des zweiten Mobilfunknetzes erfolgt.

Mit dem erfindungsgemäßen Verfahren wird somit für beliebige Fremdnetze ein dynamischer Prozess festgelegt, der gewährleistet, dass das Endgerät auch über das fremde Mobilfunknetz eine Datenverbindung aufbauen kann. Es müssen somit nicht mehr vorab statische Vereinbarungen zwischen den Betreibern einzelner Netze geschlossen werden, um festzulegen, auf welche Weise die paketvermittelte Datenübertragung eines Endgeräts in einem Fremdnetz erfolgen soll, sondern es kann dynamisch entschieden werden, wie die Datenübertragung stattfinden soll. Das erfindungsgemäße Verfahren ermöglicht vielmehr durch die Bereitstellung von Informationen bezüglich entsprechender Netzbereiche im Fremdnetz die Verbindung des Endgeräts über das Fremdnetz, ohne dass ein Tunnel zum Heimatnetz bei der Datenübertragung zwischengeschaltet wird. Insbesondere wenn Heimatnetz und Fremdnetz weit auseinander liegen, werden hierdurch Verzögerungen in der Datenübertragung vermieden.

In einer besonders bevorzugten Ausführungsform des erfindungsgemäßen Verfahrens wird neben dem Kernnetz des zweiten paketvermittelten Mobilfunknetzes auch das Funknetz dieses Mobilfunknetzes verwendet, das heißt die Kommunikation zwischen dem ersten Endgerät und dem Zugangsknoten des zweiten paketvermittelten Mobilfunknetzes erfolgt unter Zwischenschaltung des Funknetzes des zweiten Mobilfunknetzes.

In einer besonders bevorzugten Ausführungsform des erfindungsgemäßen Verfahrens wird zur Implementierung des Verfahrens eine bekannte Infrastruktur eines paketvermittelten Mobilfunknetzes verwendet. Diese Infrastruktur verwendet als Zugangsknoten des Kernnetzes des zweiten paketvermittelten Mobilfunknetzes einen so genannten SGSN (SGSN = Serving GPRS Support Node), der eine Verbindung hin zu dem zweiten Endgerät über einen GGSN (VN-GGSN) des zweiten paketvermittelten Mobilfunknetzes herstellt, wobei die Verbindung hin zu dem zweiten Endgerät über den GGSN erfolgt. SGSN und GGSN sind bei der paketvermittelten Übertragung im Mobilfunknetzen hinlänglich bekannte Netzknoten, welche die paketbasierte Datenübertragung zwischen Funknetz und Kernnetz koordinieren.

In einer weiteren besonders bevorzugten Ausgestaltung des erfindungsgemäßen Verfahrens verwenden sowohl das erste als auch das zweite paketvermittelte Mobilfunknetz als Netzwerkprotokoll ein IP-Protokoll, und zwar insbesondere das Mobile IP-Protokoll und Erweiterungen dieses Protokolls, vorzugsweise Mobile IPv4 und/oder Mobile IPv6 und/oder Hierarchical Mobile IPv6 (HMIPv6) und/oder Fast Handovers Mobile IPv6 (FMIPv6). Diese Protokolle bieten den Vorteil, dass bei einer bereits bestehenden Mobilfunkverbindung zwischen dem ersten und zweiten Endgerät ein nahtloser Übergang des ersten Endgeräts aus dem Heimatnetz in ein Fremdnetz erfolgen kann, ohne dass die Datenverbindung unterbrochen werden muss. Die Mechanismen von Mobile IP-Protokollen, mit denen ein derartiger nahtloser Übergang ohne Datenunterbrechung gewährleistet wird, sind hinlänglich aus dem Stand der Technik bekannt und werden deshalb an dieser Stelle nicht näher erläutert. Bei der Verwendung von Mobile IP überprüft der Zugangsknoten des zweiten paketvermittelten Mobilfunknetzes in Schritt b) und d) des erfindungsgemäßen Verfahrens zunächst, ob das erste Endgerät auch Mobile IP verwendet. Sollte das nicht der Fall sein, wird das Verfahren beendet, da in dieser speziellen Ausführungsform des Verfahrens nur die Verwendung von Mobile IP vorgesehen ist.

Die Information, dass das erste Endgerät Mobile IP verwendet, wird vorzugsweise in der Verbindungsanfrage in Schritt a) bzw. in der neuen Verbindungsanfragen in Schritt c) übertragen. Insbesondere ist diese Information in der ersten und/oder zweiten Netzidentifikation enthalten.

In einer weiteren, besonders bevorzugten Ausführungsform des erfindungsgemäßen Verfahrens erfolgt das Übertragen der Verbindungsanfragen bzw. der Antworten im Rahmen eines herkömmlichen PDP-Kontext-Aktivierungs-Prozesses. Dies bedeutet, dass die Verbindungsanfrage in Schritt a) und die neue Verbindungsanfrage in Schritt c) des erfindungsgemäßen Verfahrens Activate-PDP-Kontext-Anfragen sind und die Antwort des Zugangsknotens des Kernnetzes des zweiten paketvermittelten Mobilfunknetzes eine Activate-PDP-Kontext-Antwort ist. Die PDP-Kontext-Aktivierung und die entsprechenden Befehle sind hinlänglich aus dem Stand der Technik bekannt und werden deshalb hier nicht näher erläutert. PDP steht hierbei für das Packet Data Protocol.

In einer weiteren Ausführungsform des erfindungsgemäßen Verfahrens führt der Zugangsknoten des Kernnetzes des zweiten paketvermittelten Mobilfunknetzes in Schritt b) vor dem Senden der Antwort einen Authentifikationsprozess, insbesondere den hinlänglich aus dem Stand der Technik bekannten AAA-Prozess, durch. Der AAA-Prozess erfolgt hierbei über einen für das erste Endgerät zuständigen Authentifikationsknoten im ersten paketvermittelten Mobilfunknetz. In dem Authentifikationsprozess wird insbesondere überprüft, ob das erste Endgerät authentifiziert ist, das zweite paketvermittelte Mobilfunknetz zu verwenden, wobei nur im Falle einer erfolgreichen Authentifikation, das heißt nur wenn das erste Endgerät auch tatsächlich das zweite Mobilfunknetz verwenden darf, weitere Schritte im Verfahren durchgeführt werden.

Das erfindungsgemäße Verfahren ist sowohl in GPRS-Mobilfunknetzen als auch in UMTS-Netzen einsetzbar. Das zweite Endgerät muss hierbei kein Mobilfunkgerät sein, insbesondere kann es ein beliebiges Endgerät in einem IP-Netzwerk, insbesondere in einem IPv6-Netzwerk, sein.

Neben dem oben beschriebenen Verfahren betrifft die Erfindung ferner einen Zugangsknoten zu dem Kernnetz eines Mobilfunknetzes, insbesondere einen SGSN, wobei der Zugangsknoten derart ausgestaltet ist, dass er bei der Durchführung des Verfahrens die Funktion des Zugangsknotens des zweiten paketvermittelten Mobilfunknetzes übernehmen kann. Darüber hinaus betrifft die Erfindung auch ein Endgerät für paketvermittelte Mobilfunknetze, wobei das Endgerät derart ausgestaltet ist, dass es bei der Durchführung des erfindungsgemäßen Verfahrens die Funktion des ersten Endgeräts übernehmen kann. Das heißt, sowohl der Zugangsknoten als auch das Endgerät gemäß der Erfindung müssen derart ausgestaltet sein, dass sie die verwendeten Verbindungsanfragen bzw. Antworten des erfindungsgemäßen Verfahrens erzeugen bzw. interpretieren können. Das Endgerät ist hierbei beispielsweise ein mobiles Endgerät, insbesondere ein Mobiltelefon und/oder ein mobiler Rechner und/oder ein PDA (PDA = Personal Digital Assistant).

Ausführungsbeispiele der Erfindung werden nachfolgend anhand der beigefügten Figuren detailliert beschrieben.

Es zeigen:
- Fig. 1: eine schematische Darstellung des Zusammenwirkens von zwei paketvermittelten Mobilfunknetzen, in de- nen eine Ausführungsform des erfindungsgemäßen Ver- fahrens zur Verbindung von zwei Endgeräten einge- setzt werden kann; und
- Fig. 2: ein Nachrichtenflussdiagramm, welches den Austausch der Nachrichten zur Herstellung einer Kommunikati- onsverbindung gemäß einer Ausführungsform des er- findungsgemäßen Verfahrens wiedergibt.

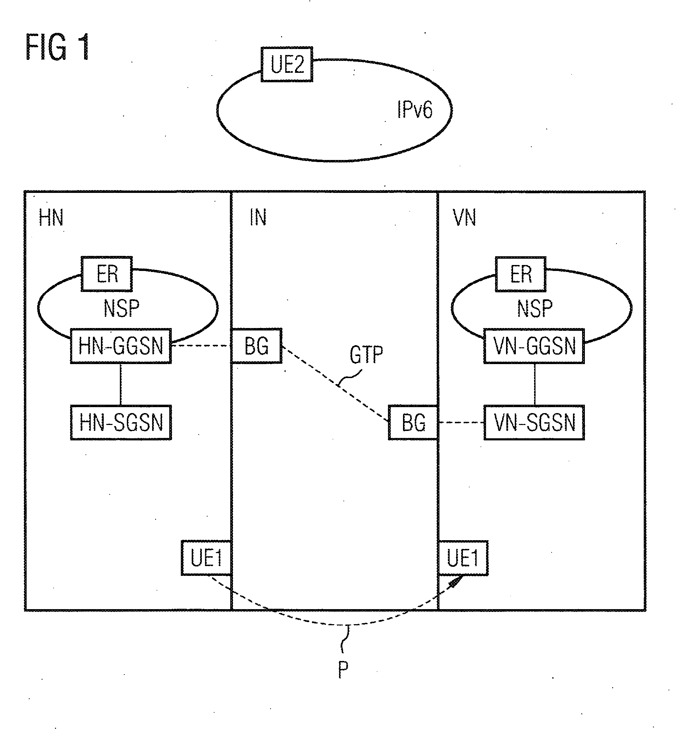

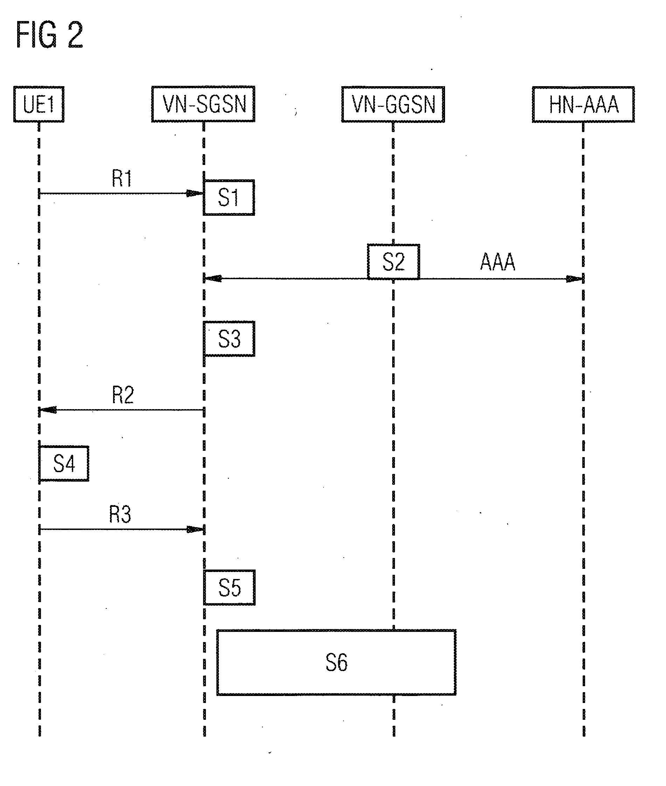

Nachfolgend wird das erfindungsgemäße Zusammenwirken von zwei paketvermittelten Mobilfunknetzen anhand von Fig. 1 und 2 beschrieben. Die paketvermittelten Mobilfunknetze können hierbei GPRS-Netze (GPRS = General Package Radio Service) oder auch UMTS-Mobilfunknetze (UMTS = Universal Mobile Telecommunication Service) sein. In Fig. 1 sind diese beiden Mobilfunknetze als HN für Heimatnetz und VN für "Visited Network" bzw. Fremdnetz bezeichnet. Beide Netze HN und VN werden hierbei von entsprechenden Netzwerk-Service-Providern NSP verwaltet. Fig. 1 zeigt ein Szenario, in dem sich ein erstes Endgerät UE1, welches insbesondere ein Mobiltelefon ist, mit einem zweiten Endgerät UE2, welches ein Endgerät in einem IPv6-Netzwerk ist, verbinden möchte.

Dem Endgerät UE1 ist hierbei ein Netzbereich bzw. eine Netzdomäne in dem Heimat-PLMN-Mobilfunknetz HN zugeordnet (PLMN = Public Land Mobile Network). Die Information bezüglich der zugeordneten Netzdomäne ist als so genannter APN (APN = Access Point Name) in dem Endgerät UE1 gespeichert. Der APN besteht hierbei aus zwei Bestandteilen, nämlich einer Netzidentifikation und einer Operatoridentifikation. Die Netzidentifikation ist üblicherweise ein Internet-Domain-Name, wie z. B. maschine.domain.de, der eindeutig das IP-Netzwerk im Heimatnetz HN identifiziert, mit denen sich das Gerät UE1 üblicherweise immer dann verbindet, wenn sich das Gerät UE1 auch in dem Heimatnetz HN befindet. Die Operatoridentifikation in dem APN ist üblicherweise ein String, wie z. B. operator.country.gprs, der eindeutig den Operator der entsprechenden Netzdomäne spezifiziert.

Das Heimatnetz HN umfasst die üblicherweise in paketvermittelten Mobilfunknetzen eingesetzten Netzkomponenten, insbesondere einen HN-SGSN (SGSN = Serving GPRS Support Node), der den Zugangsknoten hin zu dem Kernnetz des Mobilfunknetzes darstellt. Insbesondere übernimmt der SGSN das Routing und die Übergabe von Paketen an die entsprechenden Endgeräte in dem Versorgungsbereich des SGSN. Der SGSN wirkt hierbei mit einem entsprechenden HN-GGSN im Heimatnetz zusammen (GGSN = Gateway GPRS Support Node).

Der HN-GGSN stellt die für die Abwicklung des Datenverkehrs notwendigen Gateway-Funktionen zur Verfügung. Die beiden Komponenten GGSN und SGSN sind hinlänglich aus dem Stand der Technik bekannt und werden deshalb hier nicht mehr im Detail erläutert.

Befindet sich das Endgerät UE1 in seinem Heimatnetz HN, sendet es seine APN an den HN-SGSN über die so genannte PDP-Kontext-Aktivierung (PDP = Packet Data Protocol). Das Verfahren der Kontext-Aktivierung über PDP ist ebenfalls hinlänglich aus dem Stand der Technik bekannt und wird deshalb auch nicht weiter beschrieben. Nach Empfang des APN durch den HN-SGSN löst der HN-SGSN diese APN auf und erhält hierdurch die IP-Adresse des HN-GGSN. Die Auflösung der APN erfolgt hierbei z.B. über eine DNS-Anfrage (DNS = Domain Name Service).

Nach Durchführung der bekannten PDP-Kontext-Aktivierung erfolgt dann ein paketbasierter Datentransport über das Heimatnetz HN zwischen dem ersten Mobilfunkgerät UE1 und einem zweiten Mobilfunkgerät UE2, mit dem das Gerät UE1 Daten austauschen möchte. In dem Szenario der Fig. 1 ist beispielsweise das Gerät UE2 Teil eines weiteren Datennetzes, eines paketbasierten Datennetzes, welches als Netzwerkprotokoll IPv6 verwendet. Der Transport erfolgt dann unter Zwischenschaltung des Heimatnetzes HN über HN-SGSN und HN-GGSN in das Netz HN und von dort über den Router ER (ER = Edge Router) in das IPv6-Datennetz, in dem sich das Gerät UE2 befindet.

Die vorliegende Erfindung betrifft die Problemstellung des so genannten Roamings, bei dem sich das erste Endgerät UE1 aus dem Heimatnetz HN hinausbewegt und sich in einem fremden paketvermittelten Mobilfunknetz VN befindet. Das Szenario des Roamings, das heißt die Bewegung von UE1 vom Netz HN zum Netz VN, ist hierbei durch den Pfeil P angedeutet. Das fremde Netz ist analog zum Heimatnetz HN aufgebaut und enthält die gleichen Komponenten, nämlich einen entsprechenden VN-SGSN und einen VN-GGSN sowie einen Router ER hin zu dem IPv6-Netz des zweiten Endgeräts UE2, mit dem sich UE1 verbinden möchte.

Um ein nahtloses Roaming beim Übergang des ersten Endgeräts UE1 von dem Netz HN zu dem Netz VN zu ermöglichen, wird in der hier beschriebenen Ausführungsform der Erfindung das aus dem Stand der Technik bekannte Mobile IPv6-Protokoll verwendet. Dieses Protokoll ermöglicht die Verwendung von zwei IP-Adressen für das UE1, nämlich der IPv6-Adresse des UE1 im Heimatnetz HN und der IPv6-Adresse des UE1 im Fremdnetz VN. Besteht eine Verbindung zwischen dem UE1 und dem UE2 im Heimatnetz HN, wird mit dem Mobile IPv6-Protokoll ein Übergang des UE1 in das Netz VN ohne Abbruch der Verbindung ermöglicht, da Datenpakete, die an die IP-Adresse im Heimatnetz HN von dem UE2 ausgesendet werden, mit Hilfe von Mobile IPv6 zu der neuen IP-Adresse im besuchten Netzwerk VN umgeleitet werden.

Es erweist sich bei einem Roaming-Szenario als problematisch, dass vorab festgelegt werden muss, über welchen GGSN, das heißt ob über den HN-GGSN oder über den VN-GGSN, Datenpakete zwischen dem Endgerät UE1 und dem Endgerät UE2 ausgetauscht werden sollen, wenn sich das UE1 im Fremdnetz VN befindet. Durch diese statische Festlegung des zu verwendenden GGSN kann es häufig zu langen Datenübertragungswegen kommen. Dies tritt insbesondere dann auf, wenn vorab festgelegt wird, dass sich das UE1 immer nur mit dem HN-GGSN im Heimatnetz verbindet. Üblicherweise wird dies durch einen entsprechenden GTP-Tunnel (GTP = GPRS Tunneling Protocol) bewirkt. Dieser Tunnel wird über ein oder mehrere zwischengeschaltete Netzwerke IN mit entsprechenden Border-Gateways BG zwischen dem VN-SGSN im Fremdnetz VN und dem HN-GGSN im Heimatnetz HN aufgebaut und ist in Fig. 1 durch eine gestrichelte Linie angedeutet. Liegen die Netzwerke HN und VN räumlich sehr weit auseinander, kann die Verwendung eines GTP-Tunnels zu unnötigen Verzögerungen bei der Datenübertragung führen.

Anstatt einen GTP-Tunnel zwischen dem VN-SGSN und dem HN-GGSN aufzubauen, kann alternativ durch eine Vereinbarung des Besitzers des Endgeräts UE1 mit den Netzbetreibern der Netze HN und VN festgelegt sein, dass sich das UE1 immer über den VN-SGSN mit dem VN-GGSN verbindet, wenn sich das UE1 im Fremdnetz VN befindet. Jedoch erfolgt auch in diesem Fall die Festlegung des zu verwendenden GGSN statisch für ein vorbestimmtes Fremdnetz VN.

Im Unterschied zu den oben beschriebenen bekannten Lösungen wird mit dem erfindungsgemäßen Verfahren ein Mechanismus bereitgestellt, der es ermöglicht, dass sich das Endgerät UE1 dynamisch immer dann mit dem VN-GGSN eines beliebigen Fremdnetzes VN verbindet, wenn sich das UE1 im Fremdnetz befindet, und zwar ohne dass vorab statische Vereinbarungen zwischen dem Besitzer des UE1 und den einzelnen Netzen HN und VN geschlossen sind. Gemäß der hier beschriebenen Ausführungsform des erfindungsgemäßen Verfahrens wird im Falle, dass sich das UE1 im Netz VN befindet, eine Verbindung mit dem entsprechenden VN-GGSN durch eine Erweiterung im Prozess der PDP-Kontext-Aktivierung bewirkt. Dies wird nachfolgend anhand des Nachrichtenflusses gemäß Fig. 2 beschrieben.

Das UE1, das sich in dem Fremdnetz VN befindet, sendet zunächst eine Activate-PDP-Kontext-Anfrage R1 zur Aktivierung des PDP-Kontextes an den VN-SGSN. Diese Anfrage enthält den APN des UE1. Wie bereits oben erwähnt, enthält der APN die Netzidentifikation der Netzdomäne, die dem UE1 zugeordnet ist. In der hier beschriebenen Ausführungsform enthält die Netzidentifikation einen Zusatz, welcher anzeigt, dass das UE1 Mobile IPv6 verwendet und daher den VN-GGSN nutzen möchte. Dies kann beispielsweise durch einen String in der Form "machine.domain.de#mipv6" erreicht werden. In einem Schritt S1 empfängt der VN-SGSN den APN und detektiert aufgrund des Zusatzes in der Netzidentifikation, dass das UE1 Mobile IPv6 verwendet. Ferner erkennt der VN-SGSN, dass die Netzidentifikation des UE1 nicht dem Fremdnetz VN zugeordnet ist. Demzufolge führt der VN-SGSN eine Authentifizierung AAA im Schritt S2 (AAA = Authentication Authorisation Accounting) mit einem entsprechenden Authentifikations-Server HN-AAA im Heimatnetz durch. Der AAA-Prozess ist hinlänglich aus dem Stand der Technik bekannt und ermöglicht, dass der Netzbetreiber das UE1 identifizieren kann und ferner feststellen kann, welche Dienste dem UE1 bereitgestellt werden und in welchem Umfang diese Dienste zum Zwecke der Abrechnung genutzt werden.

In dem AAA-Prozess wird unter anderem überprüft, ob das Endgerät UE1 autorisiert ist, das Fremdnetz VN zu nutzen, das heißt ob eine entsprechende Roaming-Vereinbarung zwischen den Betreibern des Heimatnetzes HN und des Fremdnetzes VN besteht. Im Falle, dass das Endgerät UE1 autorisiert ist, das Fremdnetz VN zu verwenden, stellt der VN-SGSN in einem nächsten Schritt S3 eine Liste von Domain-Namen zur Verfügung, welche im Fremdnetz VN liegen und welche es zulassen, dass sich das UE1 mit diesen Domains verbindet. Der VN-SGSN sendet diese Liste von Domain-Namen dann in einer modifizierten PDP-Kontext-Aktivierungs-Antwortnachricht R2 an das UE1. Das UE1 erzeugt dann im Schritt S4 einen neuen APN basierend auf der Information in der Nachricht R2, das heißt das UE1 wählt eine Domain aus der Domainliste aus und verwendet die Netzidentifikation dieser Domain in dem neuen APN. Die Auswahl kann hierbei nach beliebigen Kriterien erfolgen, sie kann beispielsweise zufällig sein oder es wird immer die Domain verwendet, die an der obersten Stelle in der Liste steht.

Der neue APN wird anschließend in der Form einer neuen Activate-PDP-Kontext-Anfrage R3 von dem UE1 an den VN-SGSN gesendet. In einem Schritt S5 empfängt der VN-SGSN diesen APN, wobei die Netzidentifikation der APN wiederum einen entsprechenden Zusatz enthält, dass das Endgerät UE1 Mobile IPv6 benutzt. Analog zum Schritt S1 detektiert der VN-SGSN in Schritt S5, dass das UE1 MIPv6 verwendet. Im Unterschied zu Schritt S1 stellt der VN-SGSN nunmehr jedoch fest, dass der neue APN eine Netzidentifikation enthält, welche dem Fremdnetz VN zugeordnet ist. Dies bedeutet, dass aufgrund der neuen Netzidentifikation nunmehr eine Verbindung über den VN-GGSN des Fremdnetzes möglich ist. Folglich wählt der VN-SGSN im Schritt S6 den VN-GGSN des Fremdnetzes als Zugangspunkt zur Datenübertragung aus und es wird anschließend die übliche, aus dem Stand der Technik bekannte PDP-Kontext-Aktivierung durchgeführt, so dass schließlich eine Datenverbindung zwischen dem ersten Endgerät UE1 und dem zweiten Endgerät UE2, aufgebaut wird.

Mit der im Vorangegangenen beschriebenen Ausführungsform des erfindungsgemäßen Verfahrens wird erreicht, dass sich ein Endgerät, welches sich in einem Fremdnetz befindet, dynamisch auch mit dem GGSN des Fremdnetzes verbinden kann und hierüber die Datenverbindung zu einem anderen Endgerät aufbaut. Da ferner das Protokoll Mobile IPv6 verwendet wird, ist darüber hinaus die Kontinuität einer bestehenden Datenverbindung dahingehend gewährleistet, dass ein Endgerät zwischen dem Heimatnetz und einem Fremdnetz wechseln kann, ohne dass die Datenverbindung unterbrochen wird.

Mit dem erfindungsgemäßen Verfahren wird somit eine Verbindung mit dem GGSN eines beliebigen Fremdnetzes sichergestellt, sobald das Endgerät das Fremdnetz betritt, und zwar ohne dass dies vorab explizit für ein bestimmtes Fremdnetz in den Daten des Netzteilnehmers hinterlegt sein muss. Es werden darüber hinaus lange Übertragungswege und damit verbundene Verzögerungen vermieden, da nicht mehr der Fall auftreten kann, dass sich das Endgerät im Fremdnetz mit einem gegebenenfalls weit entfernten GGSN im Heimatnetz verbindet. Hierdurch wird die Qualität der Datenübertragung bei verzögerungssensitiven Anwendungen, wie z. B. Videoübertragungen, verbessert.

## Patentansprüche

1. Verfahren zur Kommunikation von Endgeräten (UE1, UE2) über paketvermittelte Mobilfunknetze (HN, VN), welche jeweils ein Funknetz und ein über einen Zugangsknoten (VN-SGSN) zugängliches Kernnetz umfassen, bei dem:
a) ein erstes Endgerät (UE1), dem eine erste Netzidentifikation zur Identifizierung eines Netzbereichs in einem ersten paketvermittelten Mobilfunknetz (HN) zugeordnet ist, eine Verbindungsanfrage (R1) umfassend die erste Netzidentifikation zum Verbinden mit dem Netzbereich gemäß der ersten Netzidentifikation an einen Zugangsknoten (VN-SGSN) des Kernnetzes eines zweiten paketvermittelten Mobilfunknetzes (VN) sendet;
b) der Zugangsknoten (VN-SGSN) des Kernnetzes des zweiten paketvermittelten Mobilfunknetzes (VN) nach Empfang der Verbindungsanfrage (R1) detektiert, dass die erste Netzidentifikation einen Netzbereich identifiziert, der zu einem anderen als dem zweiten paketvermittelten Mobilfunknetz (VN) gehört, und dem ersten Endgerät (UE1) eine Antwort (R2) sendet, in der eine oder mehrere zweite Netzidentifikationen enthalten sind, welche Netzbereiche in dem zweiten paketvermittelten Mobilfunknetz (VN) identifizieren, mit welchen das erste Endgerät (UE1) verbindbar ist;
c) das erste Endgerät (UE1) nach Empfang der Antwort (R2) eine der zweiten Netzidentifikationen auswählt und anschließend eine neue Verbindungsanfrage (R3) zum Verbinden mit dem Netzbereich gemäß der ausgewählten zweiten Netzidentifikation an den Zugangsknoten (VN-SGSN) des Kernnetzes des zweiten paketvermittelten Mobilfunknetzes (VN) sendet;
d) die neue Verbindungsanfrage (R3) vom Zugangsknoten (VN-SGSN) des Kernnetzes des zweiten paketvermittelten Mobilfunknetzes (VN) empfangen wird und anschließend eine Verbindung über den Netzbereich gemäß der ausgewählten zweiten Netzidentifikation hin zu einem zweiten Endgerät (UE2) hergestellt wird.

2. Verfahren nach Anspruch 1, bei dem die Kommunikation zwischen dem ersten Endgerät (UE1) und dem Zugangsknoten (VN-SGSN) des Kernnetzes des zweiten paketvermittelten Mobilfunknetzes unter Zwischenschaltung des Funknetzes des zweiten paketvermittelten Mobilfunknetzes (VN) erfolgt.

3. Verfahren nach einem der vorhergehende Ansprüche, bei dem der Zugangsknoten (VN-SGSN) des Kernnetzes des zweiten paketvermittelten Mobilfunknetzes (VN) ein SGSN ist, der eine Verbindung hin zu dem zweiten Endgerät (UE2) über einen GGSN (VN-GGSN) des zweiten paketvermittelten Mobilfunknetzes (VN) herstellt.

4. Verfahren nach einem der vorhergehende Ansprüche, bei dem das erste und zweite paketvermittelte Mobilfunknetz (HN, VN) als Netzwerkprotokoll ein IP-Protokoll verwenden, insbesondere Mobile IP und besonders bevorzugt Mobile IPv4 und/oder Mobile IPv6 und/oder Hierarchical Mobile IPv6 und/oder Fast Handover Mobile IPv6.

5. Verfahren nach Anspruch 4, bei dem der Zugangsknoten (VN-SGSN) des Kernnetzes des zweiten paketvermittelten Mobilfunknetzes (VN) in Schritt b) und Schritt d) überprüft, ob das erste Endgerät (UE1) Mobile IP verwendet, wobei das Verfahren beendet wird, wenn das erste Endgerät (UE1) nicht Mobile IP verwendet.

6. Verfahren nach Anspruch 5, bei dem die Information, dass das erste Endgerät (UE1) Mobile IP verwendet, in der Verbindungsanfrage (R1) in Schritt a) bzw. der neuen Verbindungsanfrage in Schritt c) übertragen wird.

7. Verfahren nach Anspruch 6, bei dem die Information, dass das erste Endgerät (UE1) Mobile IP verwendet, in der ersten und/oder zweiten Netzidentifikation enthalten ist.

8. Verfahren nach einem der vorhergehenden Ansprüche, bei dem die Verbindungsanfrage in Schritt a) und die neue Verbindungsanfrage in Schritt c) Activate-PDP-Kontext-Anfragen sind und die Antwort des Zugangsknotens (VN-SGSN) des Kernnetzes des zweiten paketvermittelten Mobilfunknetzes (VN) eine Activate-PDP-Kontext-Antwort ist.

9. Verfahren nach einem der vorhergehende Ansprüche, bei dem der Zugangsknoten (VN-SGSN) des Kernnetzes des zweiten paketvermittelten Mobilfunknetzes (VN) in Schritt b) vor dem Senden der Antwort (R2) eine Authentifikationsprozess, insbesondere einen AAA-Prozess, mit einem für das erste Endgerät (UE1) zuständigen Authentifikationsknoten (HN-AAA) im ersten paketvermittelten Mobilfunknetz (HN) durchführt.

10. Verfahren nach Anspruch 9, bei dem in dem Authentifikationsprozess überprüft wird, ob das erste Endgerät (UE1) autheritifiziert ist, das zweite paketvermittelte Mobilfunknetz (VN) zu verwenden, wobei nur im Falle einer erfolgreichen Authentifikation weitere Schritte im Verfahren durchgeführt werden.

11. Verfahren nach einem der vorhergehenden Ansprüche, bei dem das erste und/oder zweite Mobilfunknetz ein GPRS- und/oder UMTS-Netz ist.

12. Verfahren nach einem der vorhergehenden Ansprüche, bei dem das zweite Endgerät (UE2) ein in einem IP-Netzwerk, insbesondere in einem IPv6-Netzwerk, eingebundenes Endgerät ist.

13. Zugangsknoten zu dem Kernnetz eines Mobilfunknetzes (VN), wobei der Zugangsknoten (VN-SGSN) derart ausgestaltet ist, dass er bei der Durchführung des Verfahrens nach einem der vorhergehenden Ansprüche die Funktion des Zugangsknotens des zweiten paketvermittelten Mobilfunknetzes (VN) übernehmen kann.

14. Zugangsknoten nach Anspruch 13, wobei der Zugangsknoten (VN-SGSN) einen SGSN umfasst.

15. Endgerät für paketvermittelte Mobilfunknetze (HN, VN), wobei das Endgerät (UE1) derart ausgestaltet ist, dass es bei der Durchführung des Verfahrens nach einem der Ansprüche 1 bis 12 die Funktion des ersten Endgeräts übernehmen kann.

16. Endgerät nach Anspruch 15, wobei das Endgerät (UE1) ein mobiles Endgerät, insbesondere ein Mobiltelefon und/oder ein mobiler Rechner und/oder ein PDA ist.

## Claims

1. Method for communication by terminals (UE1, UE2) via packet-switched mobile radio networks (HN, VN) which each comprise a radio network and a core network which can be accessed via an access node (VN-SGSN), in which:
a) a first terminal (UE1), to which a first network identification is allocated for identification of a network area in a first packet-switched mobile radio network (HN), sends a connection request (R1) comprising the first network identification for connection to the network area, using the first network identification, to an access node (VN-SGSN) of the core network of a second packet-switched mobile radio network (VN);
b) the access node (VN-SGSN) of the core network of the second packet-switched mobile radio network (VN) detects, after reception of the connection request (R1), that the first network identification identifies a network area which belongs to a mobile radio network (VN) other than the second packet-switched mobile radio network (VN), and sends to the first terminal (UE1) a response (R2) which contains one or more second network identifications which identify network areas in the second packet-switched mobile radio network (VN) to which the first terminal (UE1) can be connected;
c) after receiving the response (R2), the first terminal (UE1) selects one of the second network identifications and then sends a new connection request (R3) for connection to the network area, using the selected second network identification, to the access node (VN-SGSN) of the core network of the second packet-switched mobile radio network (VN);
d) the new connection request (R3) is received by the access node (VN-SGSN) of the core network of the second packet-switched mobile radio network (VN), and a connection is then set up via the network area using the selected second network identification, to a second terminal (UE2).

2. Method according to Claim 1, in which the communication between the first terminal (UE1) and the access node (VN-SGSN) of the core network of the second packet-switched mobile radio network takes place with the interposition of the radio network of the second packet-switched mobile radio network (VN).

3. Method according to one of the preceding claims, in which the access node (VN-SGSN) of the core network of the second packet-switched mobile radio network (VN) is an SGSN which sets up a connection to the second terminal (UE2) via a GGSN (VN-GGSN) of the second packet-switched mobile radio network (VN).

4. Method according to one of the preceding claims, in which the first and the second packet-switched mobile radio network (HN, VN) use an IP protocol as the network protocol, in particular mobile IP and particularly preferably mobile IPv4 and/or mobile IPv6 and/or hierarchical mobile IPv6 and/or fast handover mobile IPv6.

5. Method according to Claim 4, in which the access node (VN-SGSN) of the core network of the second packet-switched mobile radio network (VN) checks in step b) and step d) whether the first terminal (UE1) is using mobile IP, with the method being ended when the first terminal (UE1) is not using mobile IP.

6. Method according to Claim 5, in which the information that the first terminal (UE1) is using mobile IP is transmitted in the connection request (R1) in step a) and in the new connection request in step c).

7. Method according to Claim 6, in which the information that the first terminal (UE1) is using mobile IP is contained in the first and/or second network identification.

8. Method according to one of the preceding claims, in which the connection request in step a) and the new connection request in step c) are activate-PDP-context requests, and the response of the access node (VN-SGSN) of the core network of the second packet-switched mobile radio network (VN) is an activate-PDP-context response.

9. Method according to one of the preceding claims, in which the access node (VN-SGSN) of the core network of the second packet-switched mobile radio network (VN) carries out an authentication process in step b) before the transmission of the response (R2), in particular an AAA process, using an authentication node (HN-AAA), which is responsible for the first terminal (UE1), in the first packet-switched mobile radio network (HN).

10. Method according to Claim 9, in which a check is carried out in the authentication process to determine whether the first terminal (UE1) is authenticated to use the second packet-switched mobile radio network (VN), with further steps in the method being carried out only in the event of a successful authentication.

11. Method according to one of the preceding claims, in which the first and/or second mobile radio network is a GPRS and/or UMTS network.

12. Method according to one of the preceding claims, in which the second terminal (UE2) is a terminal which is included in an IP network, in particular in an IPv6 network.

13. Access node to the core network of a mobile radio network (VN), with the access node (VN-SGSN) being designed such that it can carry out the function of the access node of the second packet-switched mobile radio network (VN) when carrying out the method according to one of the preceding claims.

14. Access node according to Claim 13, with the access node (VN-SGSN) comprising an SGSN.

15. Terminal for packet-switched mobile radio networks (HN, VN), with the terminal (UE1) being designed such that it can carry out the function of the first terminal when carrying out the method according to one of Claims 1 to 12.

16. Terminal according to Claim 15, with the terminal (UE1) being a mobile terminal, in particular a mobile telephone and/or a mobile computer and/or a PDA.

## Revendications

1. Procédé pour la communication de terminaux (UE1, UE2) par l'intermédiaire de réseaux de radiotéléphonie mobile à commutation par paquets (HN, VN), qui comprennent chacun un réseau radio et un réseau central accessible par un noeud d'accès (VN-SGSN), dans lequel :
a) un premier terminal (UE1), auquel est attribuée une première identification de réseau pour l'identification d'un secteur de réseau dans un premier réseau de téléphonie mobile à commutation par paquets (HN), une demande de liaison (R1) comprenant la première identification de réseau pour la liaison avec le secteur de réseau selon la première identification de réseau à un noeud d'accès (VN-SGSN) du réseau central d'un second réseau de radiotéléphonie mobile à commutation par paquets (VN) ;
b) le noeud d'accès (VN-SGSN) du réseau central du second réseau de radiotéléphonie mobile à commutation par paquets (VN) détectant après la réception de la demande de liaison (R1) que la première identification de réseau identifie un secteur de réseau qui fait partie d'un autre réseau que le second réseau de radiotéléphonie mobile à commutation par paquets (VN), et envoie au premier terminal (UE1) une réponse (R2) dans laquelle une ou plusieurs secondes identifications de réseau sont incluses, lesquelles identifient des secteurs de réseau dans le second réseau de radiotéléphonie mobile à commutation par paquets (VN), avec lesquels le premier terminal (UE1) peut être relié ;
c) le premier terminal (UE1) choisit après la réception de la réponse (R2) l'une des secondes identifications de réseau et envoie ensuite une nouvelle demande de liaison (R3) pour la liaison avec le secteur de réseau selon la seconde identification de réseau sélectionnée au noeud d'accès (VN-SGSN) du réseau central du second réseau de radiotéléphonie mobile à commutation par paquets (VN) ;
d) la nouvelle demande de liaison (R3) est reçue du noeud d'accès (VN-SGSN) du réseau central du second réseau de radiotéléphonie mobile à commutation par paquets (VN) et une liaison est établie ensuite par l'intermédiaire du secteur de réseau selon la seconde identification de réseau sélectionnée en direction d'un second terminal (UE2).

2. Procédé selon la revendication 1, dans lequel la communication entre le premier terminal (UE1) et le noeud d'accès (VN-SGSN) du réseau central du second réseau de radiotéléphonie mobile à commutation par paquets s'effectue avec intercalation du réseau radio du second réseau de radiotéléphonie mobile à commutation par paquets (VN).

3. Procédé selon l'une quelconque des revendications précédentes, dans lequel le noeud d'accès (VN-SGSN) du réseau central du second réseau de radiotéléphonie mobile à commutation par paquets (VN) est un SGSN, qui établit une liaison en direction du second terminal (UE2) par l'intermédiaire d'un GGSN (VN-GGSN) du second réseau de radiotéléphonie mobile à commutation par paquets (VN).

4. Procédé selon l'une quelconque des revendications précédentes, dans lequel le premier et le second réseaux de radiotéléphonie mobile à commutation par paquets (HN, VN) utilisent comme protocole de réseau un protocole IP, en particulier Mobile IP et avec une préférence particulière Mobile IPv4 et/ou Mobile IPv6 et/ou Hierarchical Mobile IPv6 et/ou Fast Handover Mobile IPv6.

5. Procédé selon la revendication 4, dans lequel le noeud d'accès (VN-SGSN) du noeud central du second réseau de radiotéléphonie mobile à commutation par paquets (VN) vérifie dans l'étape b) et l'étape d) si le premier terminal (UE1) utilise Mobile IP, le procédé étant achevé lorsque le premier terminal (UE1) n'utilise pas Mobile IP.

6. Procédé selon la revendication 5, dans lequel l'information, selon laquelle le premier terminal (UE1) utilise Mobile IP, est transmise dans la demande de liaison (R1) à l'étape a) et dans la nouvelle demande de liaison à l'étape c).

7. Procédé selon la revendication 6, dans lequel l'information, selon laquelle le premier terminal (UE1) utilise Mobile IP, est incluse dans la première et/ou seconde identification de réseau.

8. Procédé selon l'une quelconque des revendications précédentes, dans lequel la demande de liaison à l'étape a) et la nouvelle demande de liaison à l'étape c) sont des demandes de contexte de Activate-PDP et la réponse du noeud d'accès (VN-SGSN) du réseau central du second réseau de radiotéléphonie mobile à commutation par paquets (VN) est une réponse de contexte de Activate-PDP.

9. Procédé selon l'une quelconque des revendications précédentes, dans lequel le noeud d'accès (VN-SGSN) du réseau central du second réseau de radiotéléphonie mobile à commutation par paquets (VN) effectue à l'étape b) avant l'envoi de la réponse (R2) un processus d'authentification, en particulier un processus AAA, avec un noeud d'authentification (HN-AAA) compétent pour le premier terminal (UE1) dans le premier réseau de radiotéléphonie mobile à commutation par paquets (HN).

10. Procédé selon la revendication 9, dans lequel on vérifie dans le processus d'identification si le premier terminal (UE1) est authentifié pour utiliser le second réseau de radiotéléphonie mobile à commutation par paquets (VN), d'autres étapes étant mises en oeuvre dans le procédé uniquement dans le cas d'une authentification réussie.

11. Procédé selon l'une quelconque des revendications précédentes, dans lequel le premier et/ou le second réseau de radiotéléphonie mobile est un réseau GPRS et/ou un réseau UMTS.

12. Procédé selon l'une quelconque des revendications précédentes, dans lequel le second terminal (UE2) est un terminal intégré dans un réseau IP, en particulier dans un réseau IPv6.

13. Noeud d'accès au réseau central d'un réseau de radiotéléphonie mobile (VN), le noeud d'accès (VN-SGSN) étant conçu de telle sorte que, lors de la mise en oeuvre du procédé selon l'une quelconque des revendications précédentes, il peut prendre en charge la fonction du noeud d'accès du second réseau de radiotéléphonie mobile à commutation par paquets (VN).

14. Noeud d'accès selon la revendication 13, le noeud d'accès (VN-SGSN) comprenant un SGSN.

15. Terminal pour des réseaux de radiotéléphonie mobile à commutation par paquets (HN, VN), le terminal (UE1) étant conçu de telle sorte que, lors de la mise en oeuvre du procédé selon l'une quelconque des revendications 1 à 12, il peut prendre en charge la fonction du premier terminal.

16. Terminal selon la revendication 15, le terminal (UE1) étant un terminal mobile, en particulier un téléphone mobile et/ou un ordinateur mobile et/ou un PDA.
